# EUROPÄISCHE PATENTANMELDUNG

(11) **EP 0 775 573 A2**
(43) Veröffentlichungstag der Anmeldung: **28.05.1997**
(21) Anmeldenummer: 96117911.6
(22) Anmeldetag: 08.11.1996
(51) Int. Cl.: B32B 15/08, B32B 31/06, B29C 47/12

(54) **Vorrichtung und Verfahren zur Herstellung von Kunststoff-/Metall-Verbundplatten**

(30) Priorität: 21.11.1995 DE 19543324
(71) Anmelder: BAYER AG, 51368 Leverkusen (DE)
(72) Erfinder: Koch, Boris, 42929 Wermelskirchen (DE); Goldbach, Hubert, 40882 Ratingen (DE); Krause, Frank, 51469 Bergisch Gladbach (DE); Röhner, Jürgen, 51063 Köln (DE)

(57) **Zusammenfassung**

Die Erfindung betrifft eine Vorrichtung zur kontinuierlichen Herstellung von Kunststoff-/Metall-Verbundplatten, insbesondere mit Hohlkammerprofilen, aus thermoplastischem Polymeren (3) und Endlosblechen (6, 7) bestehend wenigstens aus einem Kunststoffschmelzeleitsystem (1), Kalibratoren (4, 5), Blechzuleitungen (10, 11) und einer Abzugseinheit (9), wobei die Blechzuleitungen (10, 11) jeweils oberhalb und unterhalb des Schmelzeleitsystems (1) angeordnet sind und die Kalibratoren (4, 5) sich unmittelbar an die Zuleitungen (10, 11) und das Schmelzeleitsystem (1) anschließen.

## Beschreibung

Die Erfindung betrifft eine Vorrichtung zur kontinuierlichen Herstellung von Kunststoff-/Metall-Verbundplatten, insbesondere solchen mit Hohlkammerprofilen, aus thermoplastischen Polymeren und Endlosblechen. Die Vorrichtung besteht wenigstens aus einem Kunststoffschmelzeleitsystem mit Schmelzdüse, Kalibratoren, Blechzuleitungen und einer Abzugseinheit, wobei die Blechzuleitung jeweils ober- und unterhalb des Schmelzeleitsystems angeordnet sind und die Kalibratoren sich unmittelbar an die Zuleitungen und das Schmelzeleitsystem anschließen, um die Bleche während des Abkühlens der Kunststoffschmelze hinsichtlich ihres Abstandes zu fixieren.

In verschiedenen Bereichen der Technik wie z.B. dem Gerüstbau, der Bauindustrie allgemein oder der Fahrzeugindustrie ist man bestrebt Platten bzw. Bauplatten zu entwickeln, die einerseits die Eigenschaften von Metallplatten, z.B. Stahlplatten, aufweisen, d.h. eine hohe Tragfähigkeit bei hoher Steifigkeit und einer hohen Bruchlast zeigen. Andererseits sollen solche Platten gleichzeitig ein geringes Gewicht haben und wenn möglich zusätzlich weitere günstige Eigenschaften wie beispielsweise ein hohes Wärmedämmungsvermögen. Die genannten gewünschten Eigenschaften werden von manchen bekannten Kunststoff-/Metall-Verbundmaterialien bis zu einem gewissen Grad erfüllt.

Kunststoff-/Metall-Verbünde und ihre Herstellung sind in verschiedenen Varianten bekannt geworden. Die deutsche Offenlegungsschrift DE 38 39 855 beschreibt z.B. einen Kunststoff-/Metall-Verbund bestehend aus einer schalenförmigen Metalltragestruktur und Verstärkungsrippen aus thermoplastischen Polymeren, die an diese Metallschale angespritzt sind. Der Verbund erhält seine besondere Steifigkeit und Festigkeit in Bezug auf den Übergang zwischen Metallschale und thermoplastischem Kunststoff dadurch, daß an verschiedenen Punkten der Metallschale Ausnehmungen, Durchbrüche usw. vorgesehen sind, in die der Thermoplast nach dem Einspritzen kraft- und formschlüssig eingreift. Ein Verbund von zwei oder mehr Metallblechen mit Thermoplast, der zu einem Hohlprofil führt, wird in DE 38 39 855 nicht beschrieben.

Nachteilig ist bei dieser Art von Verbundstruktur, daß sie nur im diskontinuierlichen Verfahren gefertigt werden kann, und daß sie auf die Anwendung einer einteiligen Metallschale zurückgreift.

Das US-Patent US 40 57 944 beschreibt einen Verbundkörper zur thermischen Isolation aus einer zweiteiligen Metallhülle, Verstärkungstreben aus Kunststoff und einer Füllung der Zwischenräume aus geschlossenzelligem Polyurethanschaum. Hierbei weisen die Metallaußenwände Nuten auf, in die Zapfen der Kunststoffstreben eingeschoben sind um die Wände mit den Streben zu verbinden. Die Kanten der Metallhülsen sind zueinander über eine Schwalbenschwanznut mit der Kante zweier versetzt gegenüberliegender Kunststoffstreben verbunden.

Die Herstellung solcher Platten ist vergleichsweise aufwendig, da die runden Feder-/Nut-Verbindungen durch Einschieben der Kunststoffstreben in die Nut der jeweiligen Metallhülse bewirkt wird. Um der Platte Stabilität zu verleihen muß sie zusätzlich ausgeschäumt werden. Maßnahmen für eine kontinuierliche Plattenherstellung werden in der Schrift US 40 57 944 nicht offenbart.

Aufgabe der Erfindung ist es, ein möglichst einfaches Verfahren und eine Vorrichtung bereitzustellen, die es ermöglichen, Hohlkammerprofile aus mindestens zwei Metalldeckplatten durch Extrusion herzustellen, wobei die Profile eine hohe Steifigkeit aufweisen, hoch belastbar sind und ein gutes Rückstellverhalten haben, wobei das Verfahren möglichst in kontinuierlicher Arbeitsweise durchgeführt werden kann.

Die Aufgabe wird erfindungsgemäß gelöst durch eine Vorrichtung zur kontinuierlichen Herstellung von Kunststoff-/Metall-Verbundplatten aufweisend mindestens zwei Zuleitungen für Metallbleche aus Magazinen, je eine Führung für jedes Blech, ein beheizbares Schmelzeleitsystem einschließlich einer Extrusionsdüse für Kunststoffschmelzen, Kalibratoren zur Positionierung der Metallbleche und zur maßlichen Bestimmung der Kunststoffstege sowie eine Abzugseinheit für die fertige Verbundplatte, wobei die Zuleitungen dieser Bleche jeweils ober- und unterhalb des Schmelzeleitsystems angeordnet sind und die Kalibratoren sich unmittelbar an die Zuleitung und das Schmelzeleitsystem anschließen.

In einer bevorzugten Ausführung der Vorrichtung ist die Extrusionsdüse als Schlitzdüse zur Erzeugung von Kunststoffstegen zwischen den Metallblechen ausgebildet.

Die Vorrichtung weist bevorzugt neben der Extrusionsdüse zusätzlich Druckluftdüsen auf um z.B. beim Anfahren der Plattenherstellungsanlage die noch heiße Kunststoffschmelze zwischen den Metallblechen formstabil zu halten.

Die Schlitzdüse der Vorrichtung kann als Mehrfach-V-, X-, I-, T- oder Doppel-T-Profildüse ausgeführt sein, wobei beliebige Kombinationen von Einzelprofilen einsetzbar sind und dem Anwendungsbereich nach angepaßt und geformt sind.

Die Blechzuleitungen sind in einer bevorzugten Variante der Vorrichtung mit Anpreßwalzen oder Anpreßbacken versehen, die ein Vorwärmen der Bleche vor dem Kontakt mit dem Kunststoff ermöglichen und gegebenenfalls beheizbar sind.

In einer weiteren bevorzugten Variante der erfindungsgemäßen Vorrichtung verlaufen die Blechzuleitungen parallel, bevorzugt horizontal auf gleicher Höhe zu der Position der in den Kalibrator einlaufenden Metallbleche.

Die Kalibratoren wirken insbesondere durch magnetische Kraft oder durch Unterdruck auf die Bleche um diese in ihrer Lage zueinander in der Phase des Erhärtens der Kunststoffstege zu fixieren.

In einer weiteren Variante der Erfindung ist die Zuleitung der Kunststoffschmelze die z.B. von einem Extruder geliefert wird seitlich aus dem Schmelzeleitsystem herausgeführt.

Weiterer Gegenstand der Erfindung ist noch ein Verfahren zur kontinuierlichen Herstellung von Kunststoff-/Metall-Verbundplatten (insbesondere Stegplatten) durch Schmelzeextrusion von thermoplastischen Kunststoffen zwischen mindestens zwei Metallblechen, dadurch gekennzeichnet, daß wenigstens zwei, gegebenenfalls vorgewärmte, Metallbleche aus einem Endlosvorrat kontinuierlich oberhalb und unterhalb einer Kunststoffextrusionsdüse zugeführt werden, der Zwischenraum zwischen jeweils zwei Blechen zur Erzeugung einer Stegverbindung mit Kunststoff angespritzt wird, insbesondere im Bereich von vorgeformten Durchbrüchen oder Einkerbungen der Bleche, und daß die Bleche während des Abkühlens der Kunststoffschmelze beim Abziehen der Endlosplatte hinsichtlich ihres Abstandes fixiert werden.

Weitere bevorzugte Ausführungen der Erfindung sind den Unteransprüchen zu entnehmen.

Die Anwendung extrudierter Hohlkammerprofile als Kunststoff-/Metall-Verbundplatte umfaßt grundsätzlich alle Bereiche, in denen hohe Steifigkeit, hohe Bruchlast und ein Zäh-Bruchverhalten (wie bei duktilem Stahl) bei gleichzeitig geringem Gewicht verlangt werden. Als Beispiele können genannt werden: Dachelemente, Schalbretter, Gerüstelemente, Ladeplanken, Trittplatten, Leitplanken, Kabelbahnen, Bodenplatten, Schottwände, Rolltorelemente, Regale, evtl. wärmedämmende Panele usw.

Mit Hilfe der erfindungsgemäßen Vorrichtung werden Hohlkammerprofile aus Metall und thermoplastischem Kunststoff erhalten, die im Extrusionsverfahren so verbunden werden, daß insbesondere durch eine gezielte Anordnung von Metallblechen in den Randzonen und Kunststoffstegen im Zwischenraum ein hochbelastbares, steifes Sandwichbauteil entsteht, das ein niedriges Gewicht/Leistungsverhältnis aufweist. Anwendung findet diese aus dem erfindungsgemäßen Verfahren erhältliche Verbundplatte z.B. zur Herstellung von Dachelementen, Schalbrettern, Zwischenböden, Bühnenplatten, Gerüstelementen, Bus-Bodenplatten, als LKW-Seitenunterfahrschutz, Ladeplanke, Leitplanke etc. Die Verbundplatte besteht aus einer Kombination von zwei kaltverformten dünnwandigen Metallblechen, die im beschriebenen Extrusionsprozeß durch Kunststoffstege miteinander verbunden und schubsteif zueinander auf Abstand gehalten werden. Die Verbindung zwischen Kunststoff und Metall kann chemisch über das im Prinzip bekannte Lacksystem z.B. von "Coil-Coated"-Blechen oder die separate Zugabe eines Haftvermittlers z.B. innerhalb der Extruderdüse erfolgen. Im letzten Fall werden die beschichteten Metallbleche der Kunststoffschmelze im Extrusionskopf zugeführt, so daß die Wärmeenergie der Schmelze den Haftvermittler zur Reaktion aktiviert und Kunststoff und Metall zum Verbund bringt.

Eine andere Möglichkeit besteht darin, die Metallbleche auf unterschiedliche Art für die mechanische Verankerung des Kunststoffs zu perforieren und zu versicken. Die Metallbleche werden der Kunststoffschmelze in diesem Fall im Düsenkopf zugeführt, so daß die Schmelze durch die Durchbrüche des Metallblechs hindurchfließt und sich nach der Erstarrung dauerhaft im Metallblech verankert.

Die Bleche werden gegebenenfalls in der Zuführung vorgeheizt. Die Kalibratoren können hingegen gegebenenfalls gekühlt werden um das Erhärten der Kunststoffe nach dem Austritt aus der Extrusionsdüse zu beschleunigen.

Geeignete Kunststoffe für die Durchführung des erfindungsgemäßen Verfahrens sind alle grundsätzlich bekannten thermoplastischen Kunststoffe, insbesondere teilkristalline Thermoplasten, bevorzugt Polyamid, insbesondere Polyamid 6, Polyester, insbesondere Polybutylenterephthalat, Polypropylen, Polycarbonat, insbesondere auch jeweils glasfaserverstärkte Thermoplasten.

Weiterer Gegenstand der Erfindung sind Kunststoff/Metall-Verbundplatten erhältlich aus dem erfindungsgemäßen Verfahren.

Die Erfindung wird nachfolgend anhand der Figuren beispielhaft näher erläutert. Es zeigen dabei:
- Fig. 1: Ein Schema der erfindungsgemäßen Vorrichtung in Seitenansicht.

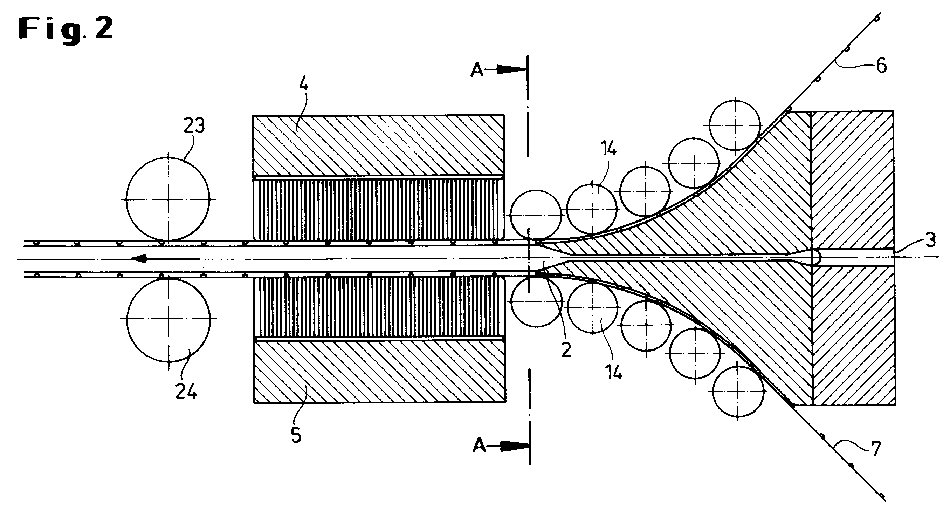

- Fig. 2: Einen schematischen Längsschnitt durch einen Teil der erfindungsgemäßen Vorrichtung mit Anpreßrollen.
- Fig. 3: Einen schematischen Längsschnitt durch einen Teil der erfindungsgemäßen Vorrichtung mit Preßbacken.
- Fig. 4: Einen Schnitt entsprechend der Linie A-A in Fig. 2 durch eine Vorrichtung mit X-Profildüsen.
- Fig. 5: Einen Schnitt wie in Fig. 4 durch eine Vorrichtung mit I-Profildüsen.
- Fig. 6: Einen Schnitt entsprechend der Linie B-B in Fig. 3 durch eine Vorrichtung mit X-Profildüsen.
- Fig. 7: Einen Schnitt wie in Fig. 6 durch eine Vorrichtung mit I-Profildüsen.
- Fig. 8: Einen Längsschnitt durch eine Variante der erfindungsgemäßen Vorrichtung mit seitlicher Zuführung der Kunststoffschmelze.
- Fig. 9: Einen Schnitt entsprechend der Linie C-C in Fig. 8 durch eine Vorrichtung mit X-Profildüsen.
- Fig. 10: Einen Schnitt wie in Fig. 9 durch eine Vorrichtung mit I-Profildüsen.

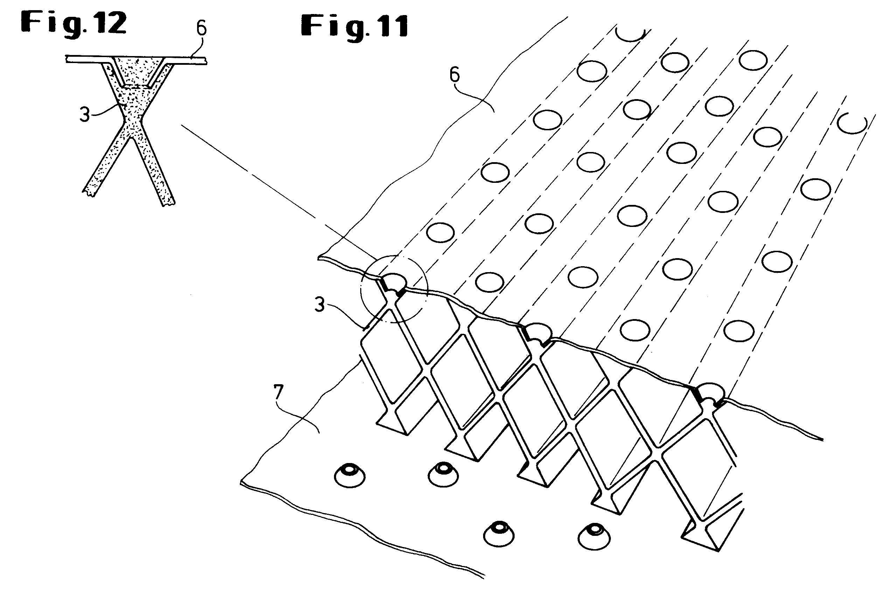

- Fig. 11: Eine perspektivische Sicht auf eine mit Hilfe der Vorrichtung nach Fig. 4 bzw. Fig. 6 hergestellte Metall-Kunststoff-Verbundplatte.
- Fig. 12: Einen vergrößertes Detail aus der Fig. 11 im Bereich eines Blechdurchbruches.

### Beispiele

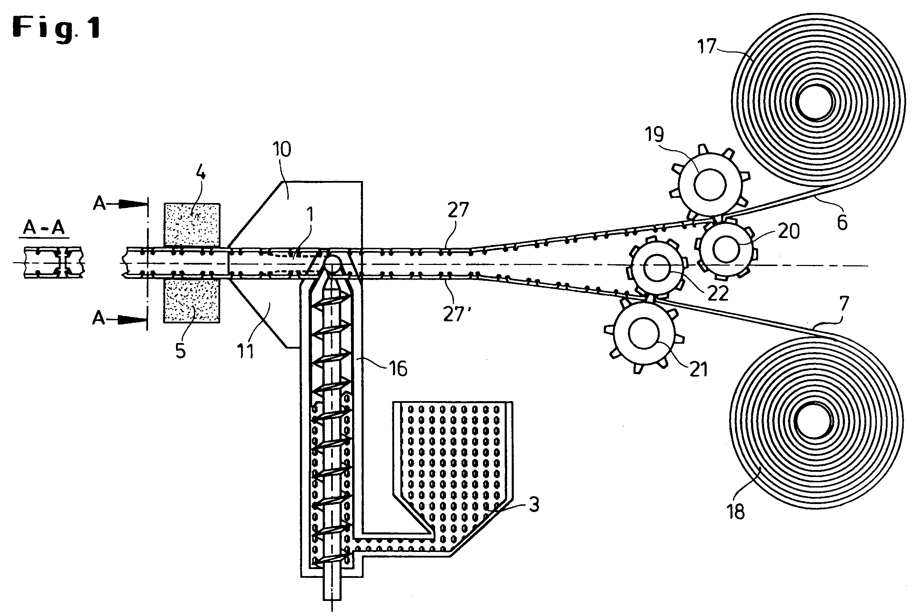

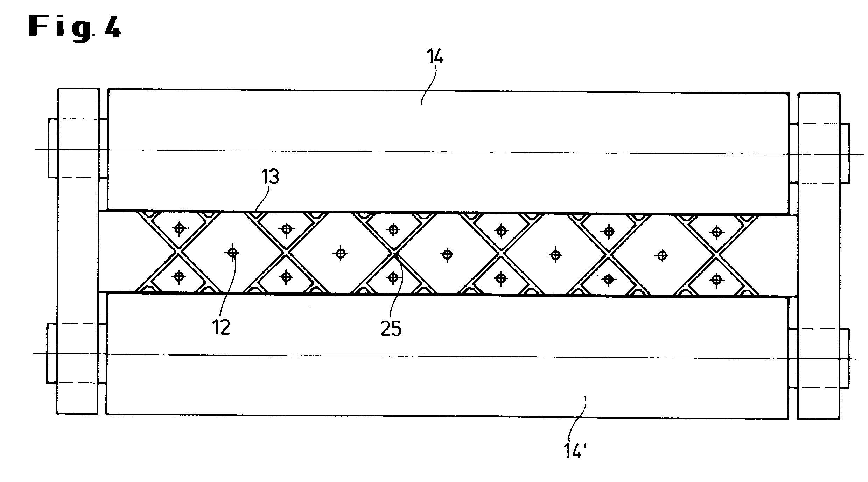

Ausgehend von zwei Vorratsrollen 17, 18 aus Stahlblech (Dicke 0,5 mm) werden die Bleche auf zwei Perforationswalzenpaaren 19, 20 und 21, 22 angezogen und mit kreisförmigen Durchbrüchen 27, 27' versehen (siehe Fig. 1). Die Bleche 6, 7 werden von den leicht beheizten Andruckwalzen 14, 14' weiter gefördert und dem Düsenkopf der Extrusionsdüse 2 zugeführt. Thermoplastischer glasfaserverstärkter Kunststoff (Polyamid 6) wird vom nicht gezeichneten Extruder durch die Schmelzekanäle 25 der Düse 2 ausgetrieben und verbindet sich im Bereich der Durchbrüche 27, 27' mit den Innenseiten der Bleche 6, 7. Die Stahlbleche werden mittels Unterdruck von den Kalibratoren 4, 5 an ihrer Oberseite angesaugt und parallel zueinander geführt, bis am Ende der Kalibratoren 4, 5 die Kunststoffschmelze 3 weitgehend abgekühlt ist. Beim Anfahren der Extrusion werden die Luftdüsen 12 mit Druckluft von ca. 3 bar beaufschlagt um ein Zusammenfallen und Verlieben der angespritzten Profilstreben zu verhindern (siehe Fig. 4). Die fertige Verbundplatte wird mit Transportwalzen 23, 24 der Weiterverarbeitung zugeführt.

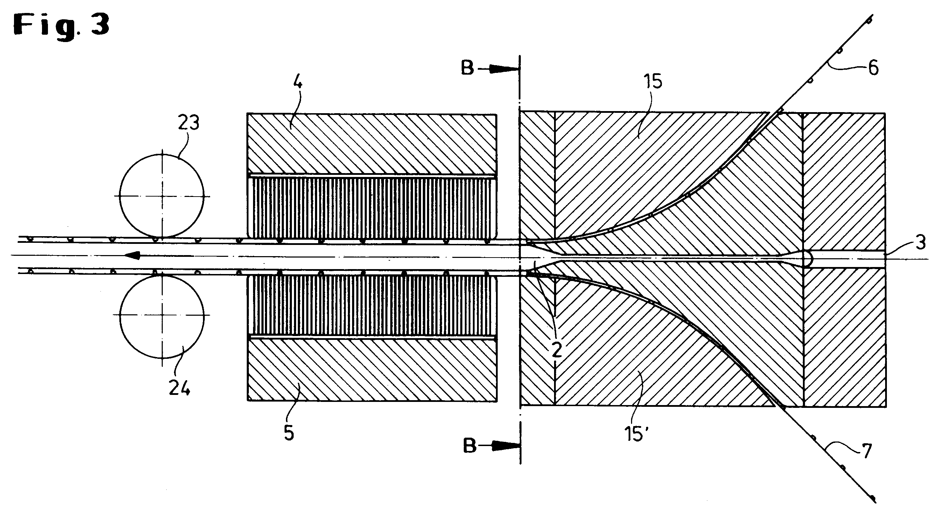

Die Anwendung von Anpreßbacken 15, 15' anstelle der Anspreßwalzen 14, 14' gestattet eine gleichmäßigere Vorheizung der Stahlbleche 6, 7 (siehe Fig. 3).

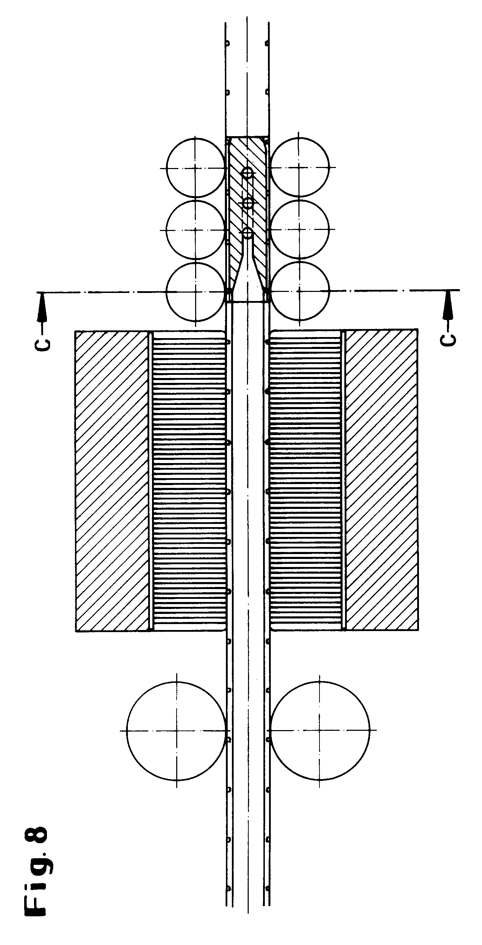

Mit einer seitlichen Zuleitung des Kunststoffes 3 vom Extruder (entsprechend Fig. 8) ist es möglich die Blechzuleitung so zu gestalten, daß die Bleche 6, 7 genau in der vertikalen Position zugeführt werden, in der sie von den Kalibratoren 4, 5 fixiert werden. Hierdurch wird ein Verziehen der Bleche aufgrund eines vorgegebenen Biegeradius um Bereich der Blechzuleitung vermieden, das insbesondere im düsennahen Bereich der Kalibratoren 4, 5 eintreten kann.

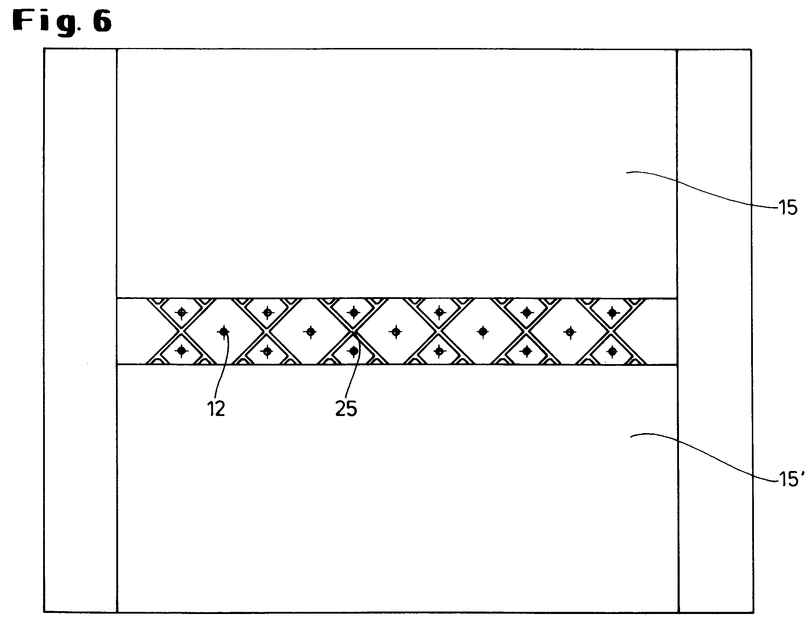

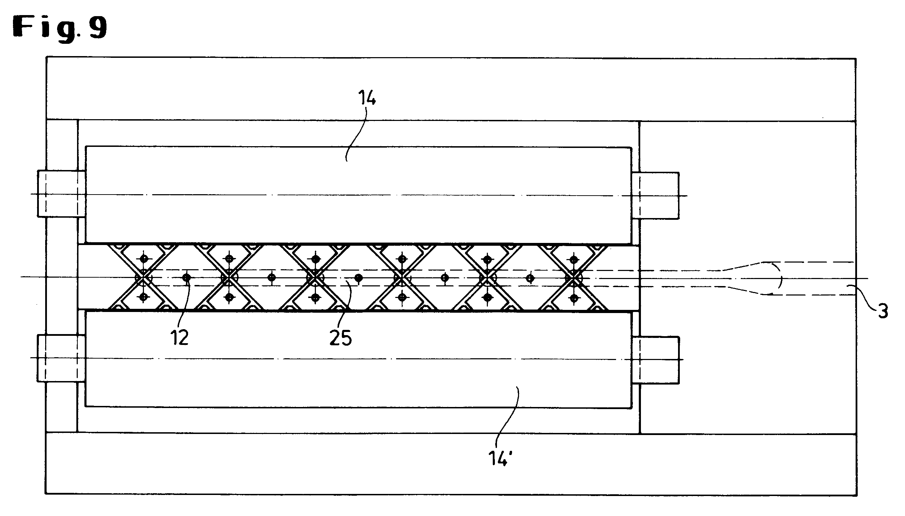

Die mit den Düsen entsprechend den Fig. 4, 6 oder 9 herstellbaren X-Profilplatten zeigen besonders gute mechanische Eigenschaften insbesondere bei einer Belastung mit Flächenlasten.

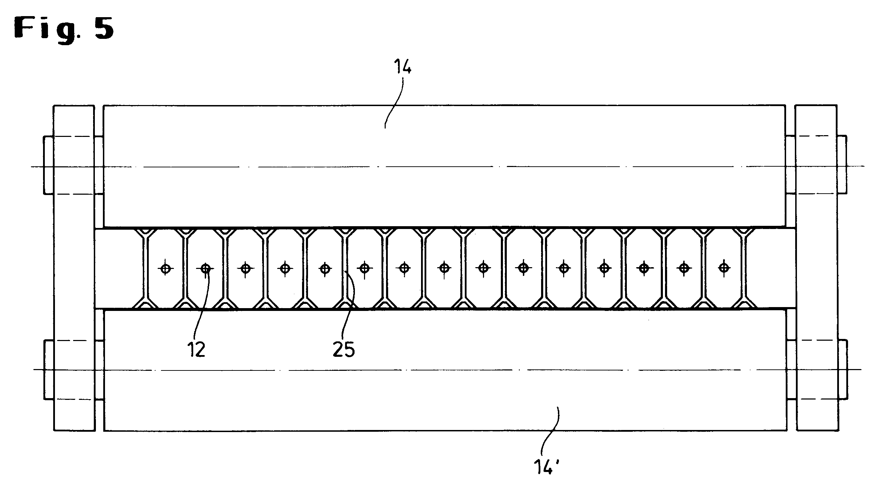

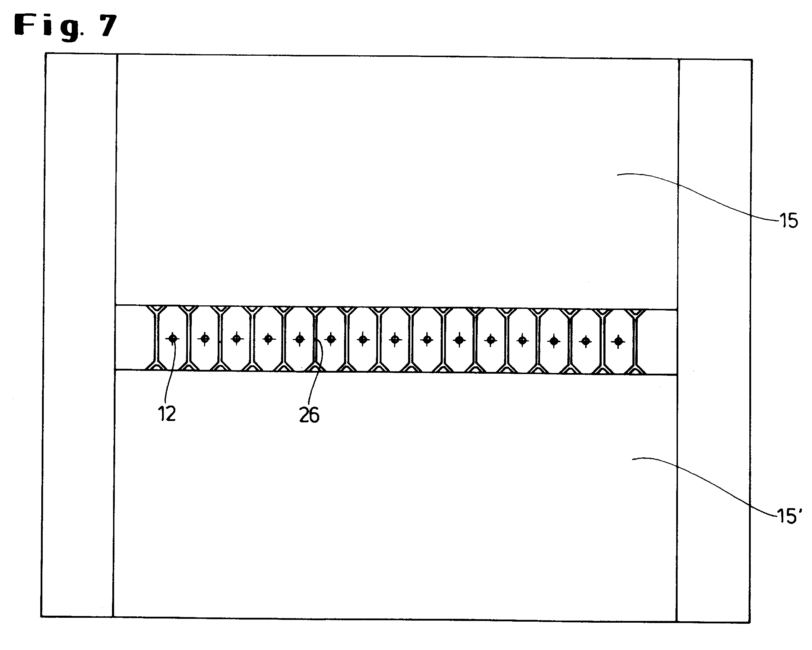

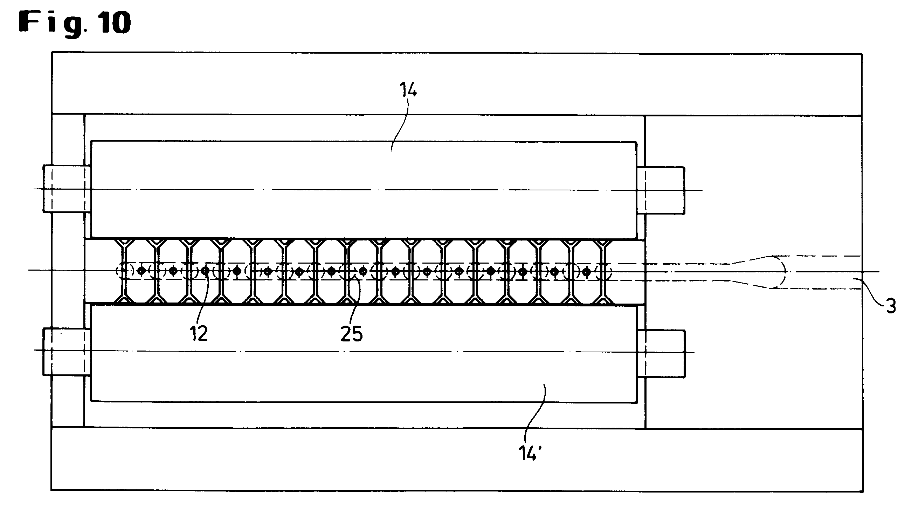

Die mit den Düsen entsprechend Fig. 5, Fig. 7 oder Fig. 10 herstellbaren I-Profilplatten zeigen eine besondere mechanische Güte bei Biegebeanspruchung in Längsrichtung der Kunststoffstege.

## Patentansprüche

1. Vorrichtung zur kontinuierlichen Herstellung von Kunststoff-/Metall-Verbundplatten aufweisend mindestens zwei Zuleitungen 10, 11 für Metallbleche 6, 7 aus Magazinen 17, 18, je eine Führung 14 für jedes Blech 6, 7, ein beheizbares Schmelzeleitsystem 1 einschließlich einer Extrusionsdüse 2 für Kunststoffschmelzen 3, Kalibratoren 4, 5 zur Positionierung der Metallbleche 6, 7 und eine Abzugseinheit 9 für die fertige Verbundplatte 8, wobei die Zuleitung 10, 11 jeweils ober- und unterhalb des Schmelzeleitsystems 1 angeordnet sind und die Kalibratoren 4, 5 sich unmittelbar an die Zuleitungen 10, 11 und das Schmelzeleitsystem 1 anschließen.

2. Vorrichtung nach Anspruch 1, dadurch gekennzeichnet, daß die Extrusionsdüse 2 als Schlitzdüse 13 zur Erzeugung von Kunststoffstegen zwischen den Metallblechen 6, 7 ausgebildet ist.

3. Vorrichtung nach einem der Ansprüche 1 - 2, dadurch gekennzeichnet, daß die Extrusionsdüse 2 zusätzlich Druckluftdüsen 12 aufweist.

4. Vorrichtung nach einem der Ansprüche 2 - 3, dadurch gekennzeichnet, daß die Schlitzdüse 13 als Mehrfach-V-, X-, I-, T- oder Doppel-T-Profildüse ausgeführt ist.

5. Vorrichtung nach einem der Ansprüche 1 - 4, dadurch gekennzeichnet, daß die Zuleitungen 10, 11 mit Anpreßwalzen 14, 14' oder Anpreßbacken 15, 15' versehen sind, die ein Vorwärmen der Bleche 6, 7 vor dem Kontakt mit dem thermoplastischen Kunststoff 3 ermöglichen und gegebenenfalls beheizbar sind.

6. Vorrichtung nach einem der Ansprüche 1 - 5, dadurch gekennzeichnet, daß die Zuleitungen 10, 11 parallel zu der Position der in die Kalibratoren 4, 5 einlaufenden Bleche 6, 7 verlaufen.

7. Vorrichtung nach einem der Ansprüche 1 - 6, dadurch gekennzeichnet, daß die Kalibratoren 4, 5 durch magnetische Kraft oder durch Unterdruck auf die Bleche 6, 7 wirken.

8. Vorrichtung nach einem der Ansprüche 1 - 7, dadurch gekennzeichnet, daß die Zuleitung der Kunststoffschmelze 3 von einem Extruder 16 seitlich aus dem Schmelzeleitsystem 1 herausgeführt ist.

9. Verfahren zur kontinuierlichen Herstellung von Kunststoff-/Metall-Verbundplatten insbesondere Stegplatten durch Schmelzeextrusion von thermoplastischen Polymeren zwischen mindestens zwei Metallblechen, dadurch gekennzeichnet, daß wenigstens zwei, gegebenenfalls vorgewärmte Metallbleche aus einem Magazin kontinuierlich oberhalb und unterhalb einer Kunststoffextrusionsdüse zugeführt werden, der Zwischenraum zwischen jeweils zwei Blechen zur Erzeugung einer Stegverbindung mit Kunststoff angespritzt wird, insbesondere im Bereich von vorgeformten Durchbrüchen oder Einkerbungen der Bleche, und daß die Bleche während des Abkühlens der Kunststoffschmelze beim Abziehen der Endlosplatte hinsichtlich ihres Abstandes fixiert werden.

10. Kunststoff/Metall-Verbundplatten erhältlich nach dem Verfahren gemäß Anspruch 9.
